# EUROPEAN PATENT SPECIFICATION

(11) **EP 0 664 236 B1**
(45) Date of publication and mention of the grant of the patent: **23.04.1997**
(21) Application number: 95300355.5
(22) Date of filing: 20.01.1995
(51) Int. Cl.: B60J 10/06

(54) **Glass run channel and a corner insert therefor**
Eckeneinsatz für Scheibenlaufkanal
Insert pour cornière de canal de guidage de fenêtre

(30) Priority: 21.01.1994 US 184473
(43) Date of publication of application: 26.07.1995
(73) Proprietor: THE STANDARD PRODUCTS COMPANY, Cleveland Ohio 44102 (US)
(72) Inventor: Mesnel, Gérard, Carrieres-sur-Seine, 78420 (FR)
(74) Representative: Jones, Michael Raymond

(56) References cited:
- EP-A- 0 355 948
- DE-A- 3 912 897

## Description

This invention relates to a glass run channel for, for instance, automobile vehicles and, more particularly, to a vehicle glass run channel having a corner, as well as to a corner insert.

Glass run channels are used in automobile vehicles and the like to support movable window panes which are capable of translational movement between open and closed positions. The glass run channel guides and supports the window pane and forms a seal around the perimeter of the window pane to protect the passenger compartment from the weather elements.

Glass run channels must be structurally sound while also allowing translational movement of the window pane without undue resistance. Automobile window openings are often designed to have a shape which poses a challenge to the design and manufacture of a glass run channel which extends around the periphery of the window opening and yet meets the above requirements. In particular, the corner structure of glass run channel is problematic with respect to structural integrity and visual appearance.

According to one aspect of the present invention, there is provided a glass run channel for a vehicle, the glass run channel having:
(A) an elongate header glass run member;
(B) an elongate pillar glass run member; and
(C) a corner insert;
each of the header member and the pillar member having a generally U-shaped channel for receiving an edge of an associated glass pane (see DE-A-3912897) characterised in that, each such channel having a leg formed of elastomeric material and having a pocket therein, the header member and the pillar member having mitred ends joined at a corner by the corner insert positioned therebetween and secured thereto, the insert having a generally U-shape with legs joined by a web, each leg of the insert having a wing extending outwardly therefrom into an associated pocket and being fixedly secured therein.

Preferably the insert has an outer leg having a surface exposed to view and a pair of opposing surfaces, each in contacting relationship with an associated end surface of one of the header member and the pillar member.

Preferably each of the wings is tapered.

Preferably each wing is secured with an associated pocket by elastomeric material, possibly with the assistance of a press fit.

Generally each glass run member has a metal core with an elastomeric skin.

Preferably the wings are in pairs, each wing extending generally perpendicularly to the other wing of the pair.

A preferred embodiment is that wherein each channel has two legs each with a pocket, and wherein there are two pairs of wings, with one pair generally parallel to the other pair, such that the four wings are located securely in the four pockets.

According to another aspect of the present invention, there is provided an insert having a generally U-shape with legs joined by a web, each leg having a wing extending therefrom.

Preferably each leg has two wings extending therefrom, the wings being in generally parallel pairs, with one wing in a pair being generally perpendicular to the other wing in the pair.

The present invention enables a glass run channel to be provided for an automotive vehicle which has an improved corner insert. The glass run channel is structurally sound and has a pleasing visual appearance particularly in the traditionally difficult corner area. Furthermore, the corner insert facilitates improved accuracy in manufacture of the length of glass run channel.

In accordance with a preferred embodiment of the present invention, a vehicle glass run channel comprises two elongate members which are joined in a mitred corner at the intersection of the vehicle door header and vertical pillar. The elongate members are secured together and reinforced by a corner insert. The corner insert has a generally U-shaped body providing an inner and outer leg joined by a web. Generally horizontally extending inner and outer wings extend respectively from the inner and outer leg and generally vertically disposed inner and outer wings extend respectively from the inner and outer legs. The wings closely fit within corresponding pockets formed in two legs in each of the glass run header channel and glass run vertical channel.

For a better understanding of the present invention and to show how the same may be carried into effect, reference will now be made, by way of example, to the accompanying drawings, in which:-
Figure 1 is an elevational view of part of a vehicle having a preferred embodiment of a vehicle glass run channel with corner insert in accordance with the present invention;
Figure 2 is an enlarged perspective view of a preferred embodiment of a corner insert of the present invention;
Figure 3 is a partial exploded elevational view showing the corner insert of Figure 2 in relationship to associated horizontal header glass run and pillar glass run members;
Figure 4 is a partial elevational view showing the vehicle glass run channel with corner insert of Figure 1, composed of the components shown in Figure 3, but in assembled form; and
Figure 5 is a sectional view taken along line 5-5 in Figure 1.

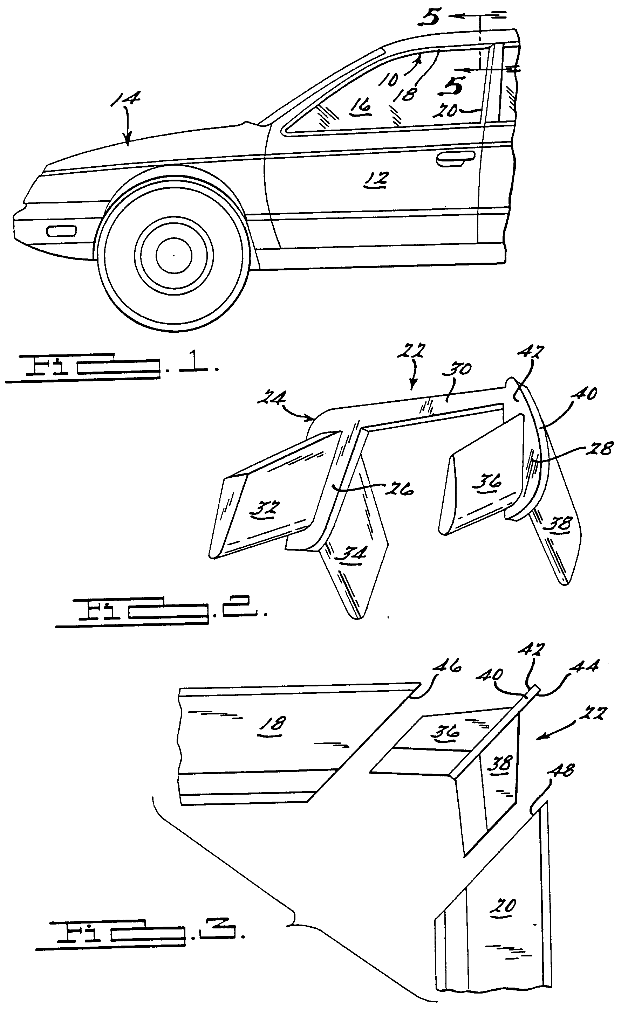

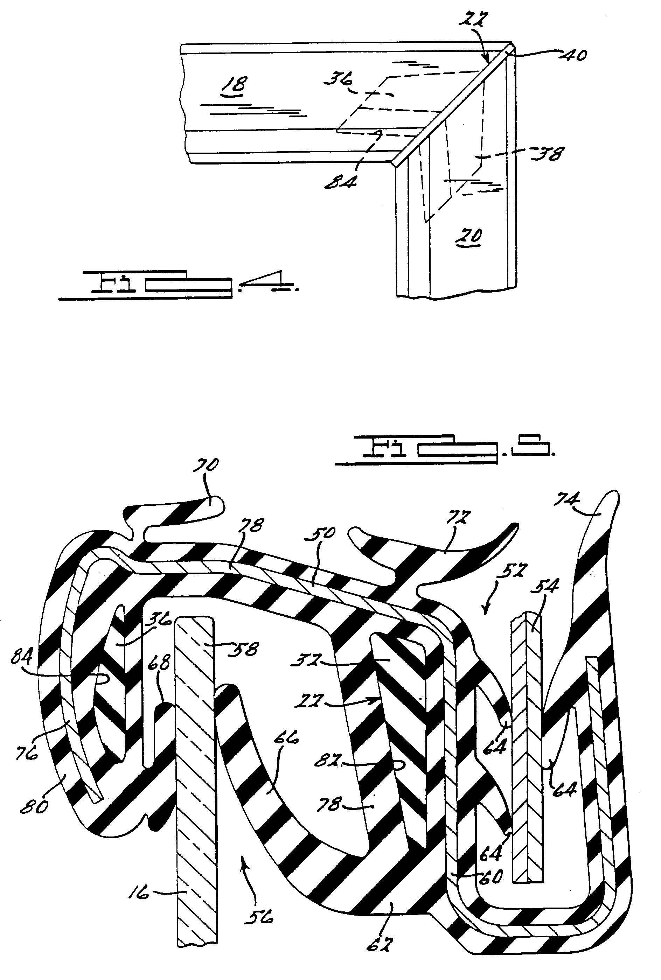

Referring to the figures, a preferred embodiment of the glass run channel with corner insert of the present invention is illustrated in Figure 1 and indicated by the numeral 10. Glass run channel 10 is shown installed in a door 12 of an automobile 14 and is in operative association with window pane 16 which is vertically translational between open and closed positions as is conventional in modern automobiles.

Broadly speaking, the glass run channel 10 comprises a header member 18 and a pillar member 20 which are joined in a mitred corner at the intersection of the vehicle door header and vertical pillar with insert 22.

Insert 22 has a generally U-shaped body 24 with inner leg 26 and outer leg 28 joined by web 30. The terms "inner" and "outer" as used herein are with reference to the interior and exterior of automotive vehicle 14. Extending outwardly from inner leg 26 and generally at a right angle with respect to each other are inner header wing 32 and inner pillar wing 34. Extending outwardly from outer leg 28 generally at a right angle with respect to each other are outer header wing 36 and outer pillar wing 38. Outer leg 28 has a show surface 40 which is presented to view externally of the automotive vehicle. Body 24 of the insert 22 has a thin clean line to an observer. U-shaped body 24 has side surfaces 42 and 44 which abut against mitred ends 46 and 48 respectively of the header 18 and pillar 20. This allows accurate sizing of the lengths of header 18 and pillar 20.

As is best shown in Figure 5, header 18 includes a metallic reinforcing core 50. Core 50 may be a solid metal core as illustrated in the figure or optionally may be formed from flexible wire, lanced or perforated metal core or even suitable polymeric material. Core 50 is formed into a generally S-shaped thereby providing a U-shaped channel portion 52 to attach to flange 54. Core 50 also has a U-shaped glass run channel portion 56 which receives edge 58 of glass pane 16. U-shaped channel portion 52 and U-shaped glass run channel portion 56 share a common leg 60. An elastomeric skin 62 covers core 50 and has polymeric retention ribs 64 within U-shaped channel portion 52 and glass guiding and sealing ribs 70, 72 and 74 extending from elastomeric skin 62 to provide a weather seal with respect to door 12.

U-shaped glass run channel portion 56 of core 50 has common leg 60 and outer leg 76 joined by web 78. Elastomeric skin 62 has a portion 78 associated with leg 60 and a portion 80 associated with leg 76. Elastomeric skin leg 78 has a pocket 82 therein while elastomeric leg 80 has a pocket 84 therein. Pocket 82 is selectively sized to receive tightly inner header wing 32 while pocket 84 is selectively sized to receive tightly outer header wing 36 of insert 22.

Generally vertically extending pillar 20 is of cross-sectional shape analogous to header 18 as shown in Figure 5 with corresponding pockets in the elastomeric skin to receive inner pillar wing 34 and outer pillar wing 38 of insert 22.

In the manufacture of the glass run channel 10, the header 18 and pillar 20 are extruded and mitre cut to length as is conventional in the art. Then, insert 22 is joined to the mitred ends of header 18 and pillar 20. In a rubber mould, wings 32, 34 are inserted into associated pockets in header 18 and pillar 20 and wings 36 and 38 are inserted into associated pockets in header 18 and pillar 20. Surfaces 46 and 48 of header 18 and pillar 20 are brought into abutting relationship with facing surfaces 42 and 44 of insert 22. The accuracy of the length of header 18 and pillar 20 is not affected by the moulding process. This allows accurate sizing of the length of each of header 18 and pillar 20. Then rubber is injected into the cavity around insert 22 proximate to web 30 to bond the corner structure.

While the above description describes a preferred embodiment of the present invention, it will be understood that the present invention is susceptible to modification, variation and alteration without varying from the scope of the following claims. For example, the cross-section of header 18 and pillar 20 can be varied somewhat within the broad scope of the present invention.

## Claims

1. A glass run channel for a vehicle, the glass run channel (10) having:
(A) an elongate header glass run member (18);
(B) an elongate pillar glass run member (20); and
(C) a corner inser (22);
each of the header member and the pillar member having a generally U-shaped channel (56) for receiving an edge of an associated glass pane, characterised in that each said channel having a leg (78, 80) formed of elastomeric material and having a pocket (82, 84) therein, the header member and the pillar member having mitred ends (46, 48) joined at a corner by the corner insert positioned therebetween and secured thereto, the insert (22) having a generally U-shape with legs (26, 28) joined by a web (30), each leg of the insert having a wing (32, 34; 36, 38) extending outwardly therefrom into an associated pocket (82, 84) and being fixedly secured therein.

2. A glass run channel as claimed in claim 1, wherein the insert (22) has an outer leg (28) having a surface (40) exposed to view and a pair of opposing surfaces (42, 44), each in contacting relationship with an associated end surface of one of the header member and the pillar member.

3. A glass run channel as claimed in claim 2, wherein each of the wings is tapered.

4. A glass run channel as claimed in claim 1, 2 or 3, wherein each wing is secured within an associated pocket (82, 84) by elastomeric material.

5. A glass run channel as claimed in claim 4, wherein each wing is secured within an associated pocket by press fit.

6. A glass run channel as claimed in any preceding claim, wherein each glass run member has a metal core (50) with an elastomeric skin.

7. A glass run channel as claimed in claim 2 or 3, or in claim 4, 5 or 6 when appendant to claim 2, wherein the wings are in pairs, each wing extending generally perpendicularly to the other wing of the pair.

8. A glass run channel as claimed in claim 7, wherein each channel has two legs each with a pocket, and wherein there are two pairs of wings, with one pair generally parallel to the other pair, such that the four wings are located securely in the four pockets.

9. A corner insert for joining an elongate header glass run member to an elongate pillar glass run member, to form a glass run channel, characterised in that the insert having a generally U-shape with legs joined by a web, each leg having a wing extending therefrom.

10. An insert as claimed in claim 9, wherein each leg has two wings extending therefrom, the wings being in generally parallel pairs, with one wing in a pair being generally perpendicular to the other wing in the pair.

## Patentansprüche

1. Ein Scheibenlaufkanal für ein Fahrzeug mit
(A) einem länglichen Kopf-Scheibenlaufteil (18),
(B) einem länglichen Säulen-Scheibenlaufteil (20) und
(C) einem Eckeneinsatz (22),
wobei sowohl das Kopfteil als auch das Säulenteil einen im wesentlichen U-förmigen Kanal (56) zum Aufnehmen einer Kante einer zugeordneten Glasscheibe hat, dadurch gekennzeichnet, daß jeder Kanal einen aus Elastomerwerkstoff gebildeten Schenkel (78, 80) mit einer Tasche (28, 84) aufweist, wobei das Kopfteil und das Säulenteil Gehrungsenden (46, 48) haben, die an einer Ecke durch den dazwischen angeordneten und mit ihnen befestigten Eckeneinsatz verbunden sind, wobei der Einsatz (22) im wesentlichen U-förmig ist und Schenkel (26, 28) hat, die durch einen Steg (30) verbunden sind, wobei jeder Schenkel einen Flügel (32, 34, 36, 38) aufweist, der sich davon auswärts in eine zugeordnete Tasche (82, 84) erstreckt und darin fest gesichert ist.

2. Ein Scheibenlaufkanal nach Anspruch 1, wobei der Einsatz (22) einen äußeren Schenkel (28) mit einer Fläche (40), die sichtbar ist, sowie ein Paar entgegengesetzter Flächen (42, 44) aufweist, die jede in Kontaktbeziehung mit einer zugeordneten Endfläche von Kopfteil und Säulenteil steht.

3. Ein Scheibenlaufkanal nach Anspruch 1 oder 2, wobei jeder der Flügel verjüngt ist.

4. Ein Scheibenlaufkanal nach einem der Ansprüche 1 bis 3, wobei jeder Flügel innerhalb einer zugeordneten Tasche (82, 84) durch Elastomerwerkstoff gesichert ist.

5. Ein Scheibenlaufkanal nach einem der Ansprüche 1 bis 4, wobei jeder Flügel innerhalb einer zugeordneten Tasche durch Preßpassung befestigt ist.

6. Ein Scheibenlaufkanal nach einem der Ansprüche 1 bis 5, wobei jedes Scheibenlaufteil einen Metallkern (50) mit einer elastomeren Haut hat.

7. Ein Scheibenlaufkanal nach einem der Ansprüche 1 bis 6, wobei die Flügel paarweise sind und jeder Flügel im wesentlichen rechtwinklig zum anderen Flügel des Paares verläuft.

8. Ein Scheibenlaufkanal nach Anspruch 7, wobei jeder Kanal zwei Schenkel hat, jedes mit einer Tasche, und worin sich zwei Paar Flügel befinden, mit einem Paar im wesentlichen parallel zum anderen Paar, so daß die vier Flügel fest in den vier Taschen angeordnet sind.

9. Ein Eckeneinsatz zum Verbinden eines länglichen Kopf-Scheibenlaufteils mit einem länglichen Säulen-Scheibenlaufteil zum Bilden eines Scheibenlaufkanals nach einem der Ansprüche 1 bis 8, dadurch gekennzeichnet, daß der im wesentlichen U-förmige Einsatz Schenkel hat, die durch einen Steg verbunden sind, wobei jeder Schenkel einen sich davon weg erstreckenden Flügel aufweist.

10. Ein Einsatz nach Anspruch 9, wobei jeder Schenkel zwei sich davon weg erstreckende Flügel hat, die im wesentlichen parallele Paare sind, wobei ein Flügel in einem Paar im wesentlichen rechtwinklig zu dem anderen Flügel im Paar ist.

## Revendications

1. Gouttière de guidage de vitre pour un véhicule, la gouttière de guidage de vitre (10) comprenant :
(A) un élément de guidage de verre de tête (18), de forme allongée ;
(B) un élément de guidage de verre de montant (20), de forme allongée ; et
(C) un insert d'angle (22) ;
chacun des éléments de tête et de montant ayant une gouttière (56) ayant la forme générale d'un U destinée à recevoir un bord d'une vitre correspondante, caractérisée en ce que chaque gouttière possède une branche (78, 80) formée de matière élastomère et présentant intérieurement une poche (82, 84), l'élément de tête et l'élément de montant ayant des extrémités à coupe d'onglet (46, 48) réunies à un angle par l'insert d'angle positionné entre ces extrémités et fixé à celles-ci, l'insert (22) ayant une forme générale de U dans laquelle les branches (26, 28) sont réunies par un voile (30), chaque branche de l'insert ayant une aile (32, 34 ; 36, 38) qui fait saillie vers l'extérieur sur cette branche pour pénétrer dans une poche correspondante (82, 84) et qui est fixée rigidement dans cette poche.

2. Gouttière de guidage de vitre selon la revendication 1, dans laquelle l'insert (22) possède une branche extérieure (28) ayant une surface (40) exposée à la vue et deux surfaces opposées (42, 44) dont chacune est en relation de contact avec une surface d'extrémité correspondante de l'un des éléments de tête et de montant.

3. Gouttière de guidage de vitre selon la revendication 2, dans laquelle chacune des ailes est à section décroissante.

4. Gouttière de guidage de vitre selon la revendication 1, 2 ou 3, dans laquelle chaque aile est fixée dans une poche correspondante (82, 84) par une matière élastomère.

5. Gouttière de guidage de vitre selon la revendication 4, dans laquelle chaque aile est fixée dans une poche correspondante par ajustement à serrage.

6. Gouttière de guidage de vitre selon une quelconque des revendications précédentes, dans laquelle chaque élément de guidage de vitre possède une âme métallique (50) munie d'une peau en élastomère.

7. Gouttière de guidage de vitre selon la revendication 2 ou 3 ou la revendication 4, 5 ou 6, rattachée à la revendication 2, dans laquelle les ailes sont disposées par paires, chaque aile s'étendant sensiblement perpendiculairement à l'autre aile de la paire.

8. Gouttière de guidage de vitre selon la revendication 7, dans laquelle chaque gouttière possède deux branches, chacune munie d'une poche, et dans laquelle il y a deux paires d'ailes, une paire étant sensiblement parallèle à l'autre paire, de sorte que les quatre ailes sont placées en position fixe dans les quatre poches.

9. Insert d'angle destiné à assembler un élément de guidage de vitre de tête de forme allongée à un élément de guidage de vitre de montant, de forme allongée, pour former une gouttière de guidage de vitre, caractérisé en ce que l'insert possède une forme générale en U, comportant des branches réunies par un voile, chaque branche portant une aile en saillie sur elle.

10. Insert selon la revendication 9, dans lequel chaque branche possède deux ailes qui font saillie sur elle, les ailes étant disposées en paires sensiblement parallèles, une aile d'une paire étant sensiblement perpendiculaire à l'autre aile de la paire.
